# EUROPEAN PATENT APPLICATION

(11) **EP 2 626 696 A1**
(43) Date of publication of application: **14.08.2013**
(21) Application number: 12154894.5
(22) Date of filing: 10.02.2012
(51) Int. Cl.: G01N 29/024, G01N 29/44

(54) **Acoustic measurement system with circular buffer**

(71) Applicant: Acosense AB, 421 30 Västra Frölunda (SE)
(72) Inventor: Törner, Felix, 414 81 GÖTEBORG (SE); Brohall, David, 475 37 BOHUS-BJÖRKÖ (SE); Xia, Li-Xun, 412 80 Göteborg (SE)
(74) Representative: Fritsche, Daniel

(57) **Abstract**

The present invention relates to a method of determining a property (P(t)) of a process fluid (5) flowing through a pipe (6) using acoustic signals. The method comprises the steps of providing (102), based on a series of stimulus samples (Xₙ), an electric stimulus signal (xₑ(t)) to a transmitter member (2) for transmitting an acoustic stimulus signal (x(t)) into the process fluid; receiving (103), using a receiver member (3), an acoustic response signal (y(t)) from the process fluid; transforming the acoustic response signal (y(t)) to an electric response signal (yₑ(t)); sampling (104) the electric response signal (yₑ(t)) at sampling times separated by a sampling period (tₛ), to form a series of response samples (yₙ); determining (108) a transfer function (H(s)) based on the series of stimulus samples and the series of response samples being shifted by a number (k) of sampling periods (tₛ) corresponding to a propagation delay (T) of a measurement chain comprising the transmitter member (2), the process fluid (5) and the receiver member (3); and determining (109) the property (P(t)) based on the transfer function (H(s)).

## Description

### Field of the invention

The present invention relates to a measuring system for determining a property of a process fluid flowing through a pipe using acoustic signals, and to a method of determining a property of a process fluid flowing through a pipe using acoustic signals.

### Background of the invention

In process industries, such as in paper pulp factories etc, different process fluids flow in pipes between process stations, such as boilers or reactors. To be able to accurately control the process, it is important to know various properties of the process fluids. Such properties may, for example, include density and viscosity.

Several different methods are used for determining or monitoring properties, such as density and viscosity, of process fluids. For example, light can be passed through the process fluid and the optical absorption of light by the process fluid can be studied. Optical methods, however, require that an optically transparent window is provided in the pipe through which the process fluid flows, which requires production to temporarily stop while the optical measurement system is installed. Furthermore, optical methods are not suitable for measurement on optically non-transparent process fluids, such as so-called black liquor.

In addition to the above-mentioned optical methods, various acoustic measuring methods are used, in particular when it is not possible or practical to modify the pipes and/or when the process fluid is not suitable for optical measurements.

Acoustic methods have been proposed for a range of purposes, ranging from relatively simple determination of the flow velocity of the process fluid, as described in US 5 650 571, to more complex measurements of further parameters, as described in WO 02/06816.

Common to these acoustic measurement systems and methods is that an acoustic stimulus signal is provided to the process fluid and an acoustic response signal being a response of the acoustic stimulus signal having passed through the process fluid is evaluated. The evaluation may involve determining the time-of-flight of the acoustic signal, as in the method according to US 5 650 571, or may involve more complex analysis, as in the method according to WO 02/06816.

In particular for determining material properties (or changes in the material properties) of the process fluid, such as density or viscosity, it would be desirable to find new ways of extracting information from the acoustic signals that is clearly indicative of the material properties of the process fluid as such and/or that reduce the noise of the measurement.

### Summary of the invention

It is thus an object of the present invention to provide for improved determination of at least one property of a process fluid using acoustic signals.

According to a first aspect of the present invention, it is therefore provided a measuring system for determining a property of a process fluid flowing through a pipe using acoustic signals, the measuring system comprising: a transmitter member for transmitting an acoustic stimulus signal into the process fluid; a receiver member for receiving an acoustic response signal; a first circular buffer for storing stimulus samples corresponding to the acoustic stimulus signal; a second circular buffer for storing response samples corresponding to the acoustic response signal; and processing circuitry connected to the first circular buffer and the second circular buffer and configured to, at sampling times separated by a sampling period: read consecutive stimulus samples in a first series of stimulus samples, for providing the acoustic stimulus signal, starting at a first element position of the first circular buffer; write consecutive response samples in a first series of response samples, corresponding to the acoustic response signal, starting at a first element position of the second circular buffer; read consecutive response samples in a second series of response samples starting at a second element position of the second circular buffer, the second element position being separated from the first element position of the second circular buffer by a first number of element positions; read consecutive stimulus samples in a second series of stimulus samples starting at a second element position of the first circular buffer, the second element position being separated from the first element position of the first circular buffer by a second number of element positions, a difference between the second number of element positions and the first number of element positions corresponding to a propagation delay through a measurement chain comprising the transmitter member, the process fluid and the receiver member; and determine the property based on the second series of response samples and the second series of stimulus samples.

The acoustic response signal is a signal received in response to the acoustic stimulus signal. At an installation site for the measuring system, sound is typically not only generated by the transmitter member, but also by other external sources, such as pumps, valves etc. Hence, in addition to information about properties of the process fluid, the acoustic response signal also contains "noise" related to sound generated by the above-mentioned other external sources.

A "circular buffer" is, as is well-known to those skilled in the art, a memory structure comprising a number of memory elements, from a first element position to a last element position, which are cycled through such that an operation (read/write) on the last element position is directly followed by an operation (read/write) on the first element position.

The processing circuitry may be configured to read a first stimulus sample, read a second stimulus sample, write a first response sample and read a second response sample simultaneously, providing for convenient real-time monitoring of one or several properties of the process fluid.

The present invention is based on the realization that one or several properties of the process fluid can be determined in real time and in a convenient manner by using one circular buffer for storing stimulus samples and another circular buffer for storing response samples, and reading the two circular buffers with a time shift corresponding to the propagation delay through the measurement chain. In this manner, the stimulus samples and the response samples can be continuously correlated in a very convenient manner. Hereby, the influence of externally generated noise can be removed or at least considerably reduced, which provides for an improved as well as facilitated determination of one or several properties of the process fluid.

Vibrations submitted into a system composed of a pipe containing a fluid are subject to dampening and/or amplification (resonance). The mechanisms behind these interactions are extremely complex, as they depend on a large number of factors including, but not limited to, density and viscosity, and are partially described in International Standard IEC 534-8-3.

The dampening/amplification mechanisms are frequency dependent, i.e. the dampening/amplification will be unique for any frequency traveling through the system. If the only parameter in the system that changes is the fluid characteristics, this makes fluid analysis by means of observing the frequency spectra for a specified frequency interval a viable option.

Since the flow of the fluid as well as process equipment such as pumps and filters give rise to vibrations of their own, the recorded signal contains noise. By forming transfer functions, such as frequency response function-spectra, this noise can be eliminated, given that it is uncorrelated to the signal of interest. For a theoretical explanation, Random Data (4th Edition, New Jersey: John Wiley & Sons, Inc.), by Julius S. Bendat & Allan G. Piersol, is referred to.

The acoustic stimulus signal may advantageously be a multi-frequency acoustic signal, such as, for example, white noise, pink noise, frequency sweeps or chirp stimulus signals. The frequencies may advantageously be in the range of 0 - 50 kHz, which is relatively low. Using such a frequency range, the need for high power excitation is significantly reduced, and it becomes possible to measure the attenuation through vessels of considerable sizes.

According to various embodiments, the measuring system of the present invention may further comprise first interface circuitry connected to the processing circuitry and to the transmitter member for converting the stimulus samples to an electric stimulus signal and to provide the electric stimulus signal to the transmitter member; and second interface circuitry connected to the processing circuitry and to the receiver member for receiving an electric response signal indicative of the acoustic response signal and for converting the electric response signal to the response samples. In particular, the first interface circuitry may advantageously comprise a digital-to-analog converter (D/A or DAC), and the second interface circuitry may advantageously comprise an analog-to-digital converter (A/D or ADC).

To provide for a convenient simultaneous and time-shifted read-out from the first circular buffer and the second circular buffer, a length of the second circular buffer may be an integer multiple of a length of the first circular buffer.

To determine the time shift in number of element positions, some knowledge about the propagation delay is needed. The propagation delay is the delay from the reading of a certain stimulus sample until the writing of a response sample that is a response to the read stimulus sample. Accordingly, the propagation delay includes a travel time for electrical signals through electronic circuitry, as well as a travel time for the acoustic signal through the process fluid.

The propagation delay may be determined manually or automatically through, for example, analysis of the impulse response of the measuring system when deployed at a measurement site.

Advantageously, the processing circuitry may further be configured to determine the propagation delay based on a correlation between a known stimulus signal and an acquired response signal. The correlation may, for example, be carried out through convolution.

According to various embodiments of the measuring system according to the present invention, the processing circuitry may be configured to determine the property by: determining a transfer function using the second series of stimulus samples and the second series of response samples; and determining the property by correlating the transfer function with a previously established relation between values of the property and corresponding transfer functions.

This previously established relation may be determined using empirical methods, such as so-called "projections to latent structures" (PLS).

PLS uses a training sets comprising manually observed characteristics of the fluid paired with transfer functions (spectra), obtained at the same time as the manual observations, to construct statistical models that "learn" what the fluid characteristic should be based on the determined transfer function (shape of the spectrum).

According to a second aspect of the present invention, there is provided a method of determining a property of a process fluid flowing through a pipe using acoustic signals, the method comprising the steps of: providing, based on a series of stimulus samples, an electric stimulus signal to a transmitter member for transmitting an acoustic stimulus signal into the process fluid; receiving, using a receiver member, an acoustic response signal from the process fluid transforming the acoustic response signal to an electric response signal; sampling the electric response signal at sampling times separated by a sampling period, to form a series of response samples; determining a transfer function based on the series of stimulus samples and the series of response samples being shifted by a number of sampling periods corresponding to a propagation delay of a measurement chain comprising the transmitter member, the process fluid and the receiver member; and determining the property based on the transfer function.

According to various embodiments, the method of the present invention may advantageously comprise the steps of reading consecutive stimulus samples in a first series of stimulus samples, for providing the acoustic stimulus signal, starting at a first element position of a first circular buffer, consecutive readings taking place at sampling times being separated by a sampling period; writing consecutive response samples in a first series of response samples, corresponding to the acoustic response signal, starting at a first element position of a second circular buffer, consecutive writings taking place at sampling times being separated by the sampling period; reading consecutive response samples in a second series of response samples starting at a second element position of the second circular buffer, the second element position being separated from the first element position of the second circular buffer by a first number of element positions; and reading consecutive stimulus samples in a second series of stimulus samples starting at a second element position of the first circular buffer, the second element position being separated from the first element position of the first circular buffer by a second number of element positions, a difference between the second number of element positions and the first number of element positions corresponding to a propagation delay through a measurement chain comprising the transmitter member, the process fluid and the receiver member.

Further embodiments of, and effects obtained through this second aspect of the present invention are largely analogous to those described above for the first aspect of the invention.

### Brief description of the drawings

These and other aspects of the present invention will now be described in more detail, with reference to the appended drawings showing example embodiments of the invention, wherein:
Fig 1 is a schematic view of an embodiment of the measuring system according to the present invention arranged at a measurement site to determine a property of a process fluid in a pipe;
Fig 2 schematically illustrates the measuring system in fig 1;
Fig 3 is a diagram schematically illustrating an exemplary impulse response of the measuring system when arranged at a measurement site;
Fig 4 schematically illustrates the memory structure of the measuring system in fig 2; and
Fig 5 is a flow-chart schematically illustrating an embodiment of the method according to the present invention.

### Detailed description of preferred embodiments

In the following detailed description, embodiments of the present invention are mainly described with reference to an acoustic measuring system having a single transmitter member and a single receiver member. It should be noted that the present invention by no means is limited to such an acoustic measuring system, but applies equally well to an acoustic measuring system having several transmitter members and/or receiver members.

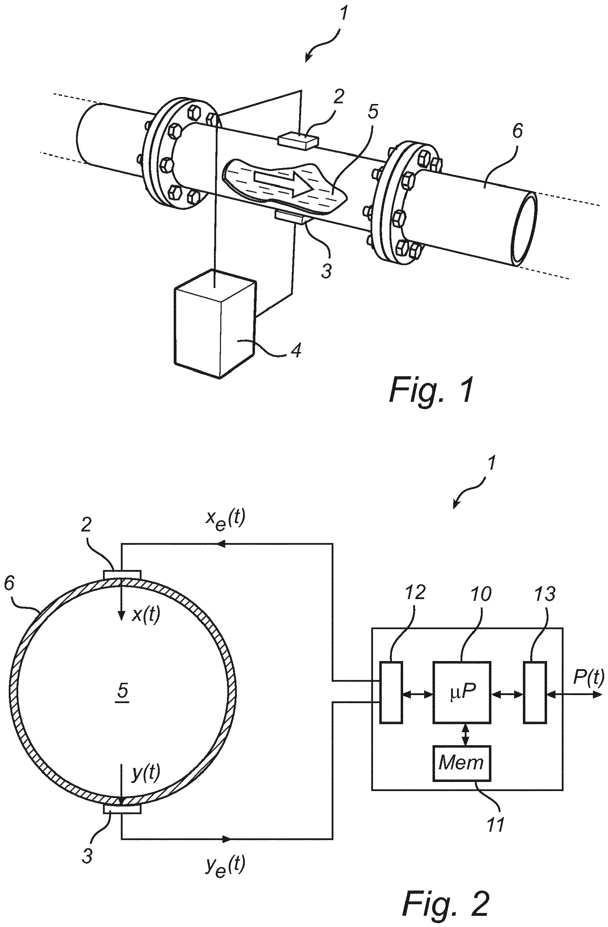

Fig 1 schematically shows an embodiment of the measuring system 1 according to the present invention installed at an exemplary measurement site. Referring to fig 1, the measuring system 1 comprises a transmitter member, in the form of a transmitting transducer 2, a receiver member, in the form of a receiving transducer 3, and a control unit 4 connected to the transmitting transducer 2 and the receiving transducer 3. The measuring system 1 is installed to measure a property P of a process fluid 5 flowing through a pipe 6. To that end, the transmitting transducer 2 and the receiving transducer 3 are mechanically coupled with the pipe 6, for example pressed against the pipe 6 using one or several clamps (not shown in fig 1), so as to be able to transmit mechanical vibrations (acoustic signals) to the process fluid 5 via the pipe 6 (the transmitting transducer 2) and receive mechanical vibrations (acoustic signals) from the process fluid 5 via the pipe (the receiving transducer 3). In operation, the transmitting transducer 2 is controlled by the control unit 4 to provide an acoustic stimulus signal x(t), which is transmitted to the process fluid 5 via the pipe 6. The receiving transducer 3 picks up an acoustic response signal y(t) from the pipe 6. The acoustic response signal y(t) comprises a contribution from the acoustic stimulus signal x(t) having interacted with the process fluid 5, as well as a contribution from noise resulting from various sources, such as from vibrations of pumps, valves, turbulence etc.

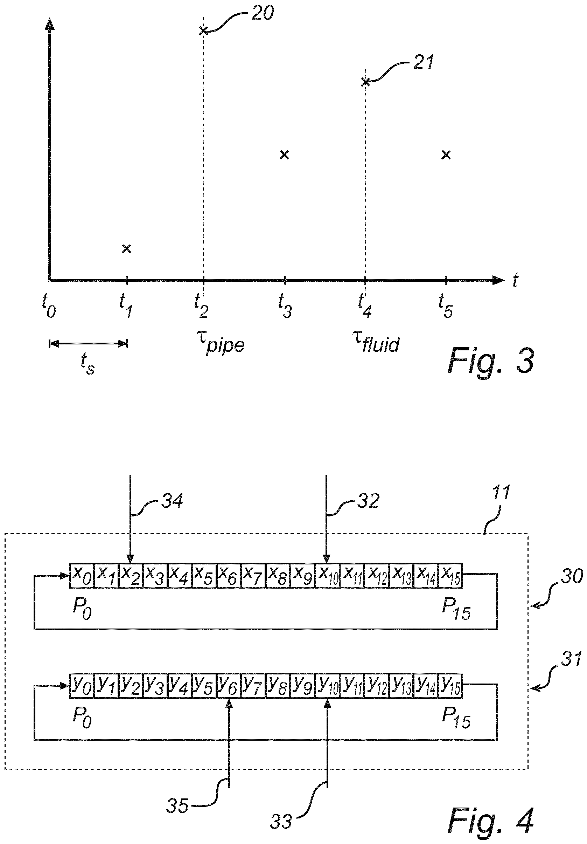

The operation of the measuring system 1 in fig 1 will now be described with reference to fig 2. The control unit 4 comprises a microprocessor 10, a memory 11, a measurement interface 12, and a communication interface 13. The microprocessor 10 is, as is schematically indicated in fig 2, arranged for bidirectional communication with each of the memory 11, the measurement interface 12 and the communication interface 13. The measurement interface 12 is connected to the transmitting transducer 2 and to the receiving transducer 3, and the communication interface 13 is connected to an external communication bus (not shown in fig 2) for providing the process fluid property P(t) to be determined, or an intermediate property from which the process fluid property P(t) can be determined. The memory 11, which will be described in greater detail below with reference to fig 4, stores stimulus samples xₙ that correspond to the acoustic stimulus signal x(t) transmitted by the transmitting transducer 2 and response samples yₙ that correspond to the acoustic response signal y(t) received by the receiving transducer 3.

The stimulus samples xₙ are read from the memory 11 by the microprocessor 10 and are converted to an analog electric stimulus signal xₑ(t) by the measurement interface 12. The electric stimulus signal xₑ(t) is provided to the transmitting transducer 2, where the electric stimulus signal xₑ(t) is transformed to the acoustic stimulus signal x(t).

The acoustic response signal y(t) is transformed by the receiving transducer 3 to an electric response signal yₑ(t), which is received by the control unit 4 through the measurement interface 12. At the measurement interface 12, the electric response signal yₑ(t) is converted to response samples yₙ, which are stored in the memory 11.

Based on the stored stimulus samples xₙ and response samples yₙ, the microprocessor 10 determines the process fluid property P(t) to be determined and provides it through the communication interface 13.

As was described in the Summary section above, system noise (noise resulting from various sources, such as from vibrations of pumps, valves, turbulence etc) that is uncorrelated to the acoustic stimulus signal x(t) can be eliminated by forming a transfer function for the measuring system 1 and its interaction with the measurement site. The transfer function is a correlation between the acoustic stimulus signal x(t) (the stimulus samples xₙ) and the acoustic response signal y(t) (the response samples yₙ). To provide for efficient elimination of the system noise, a time shift should be introduced to take into account the propagation delay T through a relevant measurement chain that at least comprises the transmitting transducer 2, the process fluid 5, and the receiving transducer 3. According to various embodiments of the present invention, the transfer function is determined based on the stimulus samples xₙ and the response samples yₙ stored in the memory 11, which means that the measurement chain additionally comprises the measurement interface 12, the microprocessor 10 and the memory 11 itself.

One exemplary way of determining the propagation delay will now be described with reference to figs 2 and 3.

At an initial time to (to = 0 in fig 3), an impulse sample x₀ is read from the memory 11 by the microprocessor 10. The microprocessor provides the impulse sample x₀ to the measurement interface 12, where the digital impulse sample x₀ is converted to an analog electric impulse stimulus signal x_{i,el}(t) which is provided to the transmitting transducer 2. The transmitting transducer 2 transforms the electric impulse stimulus signal x_{i,el}(t) to an acoustic impulse stimulus signal xᵢ(t), which is transmitted to the process fluid 5 via the wall of the pipe 6.

As was described above, the acoustic response signal y(t) is transformed to an electric response signal yₑ(t) by the receiving transducer 3. The electric response signal yₑ(t) is sampled at sampling times to, t₁,..., tₙ defined by a sampling period tₛ, to provide response samples y₀, y₁,..., yₙ, which are stored in the memory 11.

The diagram in fig 3 schematically shows the value of the response samples received in response to the impulse sample x₀. As can be seen in fig 3, y₂ (at the sampling time t₂) represents a first peak 20, which corresponds to the propagation delay through the wall of the pipe 6, and y₄ (at the sampling time t₄) represents a second peak 21, which corresponds to the propagation delay through the process fluid 5. Accordingly, a time shift of four times the sampling period tₛ should be introduced when determining the transfer function, in order to take into account the propagation delay T through the measurement chain comprising the memory 11, the microprocessor 10, the measurement interface 12, the transmitting transducer 2, the process fluid 5 and the receiving transducer 3.

It should be noted that the above description represents a simplified example, and that the propagation delay T in a real measurement system would represent a considerably larger number of sampling periods tₛ, resulting in a higher precision in the determination of the propagation delay T.

To provide for a convenient way of achieving real time determination of the process fluid property P(t) to be determined, the measuring system 1 according to various embodiments of the present invention is, as is schematically illustrated in fig 4, provided with a memory 11 that comprises a first circular buffer 30 and a second circular buffer 31. For illustration purposes, each of the first circular buffer 30 and the second circular buffer 31 illustrated in fig 4 only comprises 16 element positions p₀ - p₁₅. In an actual implementation of the measuring system, each circular buffer 30, 31 would have many more positions, such as several million positions.

As is schematically illustrated in fig 4, the first circular buffer 30 contains 16 stimulus samples xₙ, x₀-x₁₅. A first series of these stimulus samples xₙ, for providing the acoustic stimulus signal x(t), is sequentially read starting at a first sampling time to at a first element position p₀ holding the first stimulus sample x₀. At a second sampling time t₁ (after the sampling period tₛ), the second stimulus sample x₁ is read from the second element position P₁, etc, as is schematically indicated in fig 4 by a first stimulus sample read pointer 32 pointing at the 11^{th} stimulus sample x₁₀.

In synchronization with the reading of the stimulus samples xₙ, a first series of response samples yₙ are written to the second circular buffer starting at the first sampling time at the first element position p₀, where the first response sample y₀ is written. This is schematically indicated in fig 4 by a response sample write pointer 33 pointing at the 11^{th} response sample y₁₀. When the 16^{th} response sample y₁₅ has been written to the 16^{th} element position P₁₅, the subsequent response sample y₁₆ will be written to the first element position p₀, overwriting the first response sample y₀.

For the determination of the transfer function, a second series of stimulus samples are read from the first circular buffer 30 as is illustrated by a second stimulus read sample 34 pointing at the 3^{rd} stimulus sample x₂, and a second series of response samples are read from the second circular buffer 31 as is illustrated by a response sample read pointer 35. As is schematically illustrated in fig 4, the second series of stimulus samples and the second series of response samples are read with a time shift that corresponds to the propagation delay T through the process fluid 5, here four times the sampling period tₛ. This time shift may be determined as was described above with reference to fig 3.

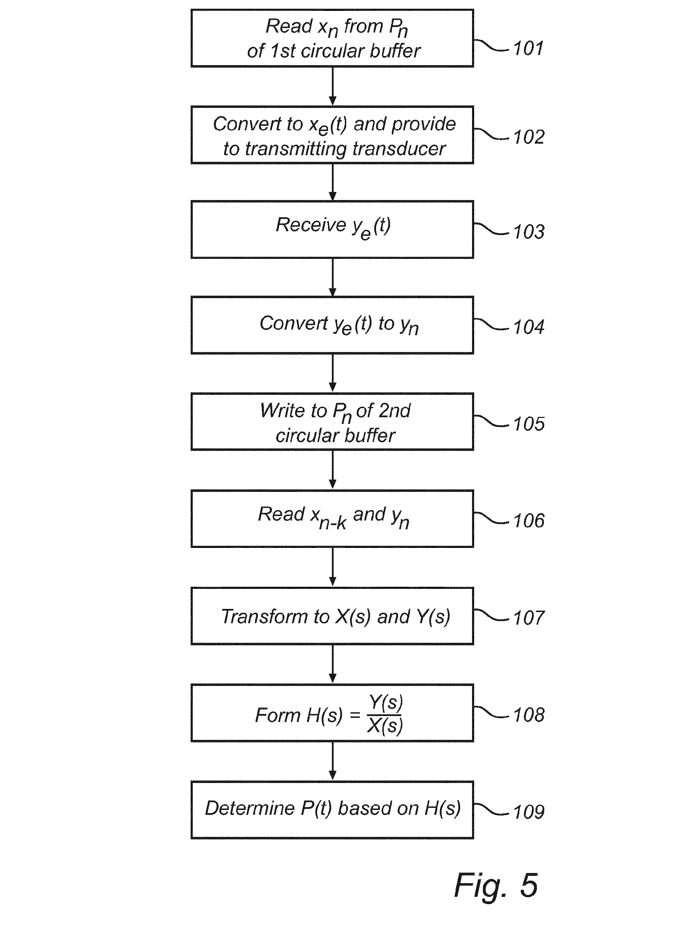

Having now described an exemplary embodiment of the measuring system 1 according to the present invention, and in particular the structure of the memory 11, an exemplary embodiment of the method according to the present invention will now be described with reference to the flow-chart in fig 5 and to figs 2 and 4.

The following method is described for a single sample. It should be understood that the method may advantageously be carried out continuously for each sample, so that a continuously updated transfer function is provided.

In a first step 101, the n^{th} stimulus sample xₙ is read from position pₙ of the first circular buffer 30. The n^{th} stimulus sample xₙ is, in step 102, converted to an electric stimulus signal xₑ(t), and is provided to the transmitting transducer 2. In the subsequent step 103, an electric response signal yₑ(t) is received from the receiving transducer 3. The electric response signal yₑ(t) is converted to a response sample yₙ in step 104, and the response sample yₙ is written to position pₙ of the second circular buffer 31 in step 105. A stimulus sample xₙ₋ₖ and a response sample yₙ, with the time shift k x *tₛ* corresponding to the propagation delay T through the measurement chain are read in step 106. In step 107, the read samples are transformed to the frequency domain to form X(s) and Y(s), and, in step 108, the transfer function H(s) = Y(s)/X(s) is formed. Finally, in step 109, the process fluid property P is determined based on the transfer function H(s).

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A measuring system (1) for determining a property (P(t)) of a process fluid (5) flowing through a pipe (6) using acoustic signals, said measuring system comprising:
a transmitter member (2) for transmitting an acoustic stimulus signal (x(t)) into said process fluid;
a receiver member (3) for receiving an acoustic response signal (y(t));
a first circular buffer (30) for storing stimulus samples (xₙ) corresponding to said acoustic stimulus signal (x(t));
a second circular buffer (31) for storing response samples (yₙ) corresponding to said acoustic response signal (y(t)); and
processing circuitry (10) connected to said first circular buffer (30) and said second circular buffer (31) and configured to, at sampling times separated by a sampling period (tₛ):
read consecutive stimulus samples (xₙ) in a first series of stimulus samples, for providing said acoustic stimulus signal (x(t)), starting at a first element position (Pₙ) of said first circular buffer (30);
write consecutive response samples (yₙ) in a first series of response samples, corresponding to said acoustic response signal (y(t)), starting at a first element position (Pₙ) of said second circular buffer (31 );
read consecutive response samples (yₙ) in a second series of response samples starting at a second element position (Pₙ) of the second circular buffer (31), said second element position being separated from said first element position of the second circular buffer by a first number of element positions;
read consecutive stimulus samples (Xₙ₋ₖ) in a second series of stimulus samples starting at a second element position (Pₙ₋ₖ) of the first circular buffer (30), said second element position (Pₙ₋ₖ) being separated from said first element position (Pₙ) of the first circular buffer (30) by a second number (k) of element positions, a difference (k) between said second number of element positions and said first number of element positions corresponding to a propagation delay (T) through a measurement chain comprising said transmitter member (2), said process fluid (5) and said receiver member (3); and
determine said property (P(t)) based on said second series of response samples (yₙ) and said second series of stimulus samples (Xₙ₋ₖ).

2. The measuring system according (1) to claim 1, wherein said acoustic stimulus signal (x(t)) is a multi-frequency acoustic signal.

3. The measuring system (1) according to claim 1 or 2, further comprising:
first interface circuitry (12) connected to said processing circuitry (10) and to said transmitter member (2) for converting said stimulus samples (xₙ) to an electric stimulus signal (xₑ(t)) and to provide said electric stimulus signal to said transmitter member (2); and
second interface circuitry (13) connected to said processing circuitry (10) and to said receiver member (3) for receiving an electric response signal (yₑ(t)) indicative of said acoustic response signal (y(t)) and for converting said electric response signal to said response samples (yₙ).

4. The measuring system (1) according to any one of the preceding claims, wherein a length of said second circular buffer (31) is an integer multiple of a length of said first circular buffer (30).

5. The measuring system (1) according to any one of the preceding claims, wherein said processing circuitry (10) is further configured to determine said propagation delay (T) based on a correlation between a known stimulus signal and an acquired response signal.

6. The measuring system (1) according to any one of the preceding claims, wherein said processing circuitry (10) is configured to determine said property by:
determining a transfer function (H(s)) using said second series of stimulus samples (Xₙ₋ₖ) and said second series of response samples (yₙ); and
determining said property (P(t)) by correlating said transfer function (H(s)) with a previously established relation between values of said property and corresponding transfer functions.

7. A method of determining a property (P(t)) of a process fluid (5) flowing through a pipe (6) using acoustic signals, said method comprising the steps of:
providing (102), based on a series of stimulus samples (xₙ), an electric stimulus signal (xₑ(t)) to a transmitter member (2) for transmitting an acoustic stimulus signal (x(t)) into said process fluid;
receiving (103), using a receiver member (3), an acoustic response signal (y(t)) from said process fluid;
transforming said acoustic response signal (y(t)) to an electric response signal (yₑ(t));
sampling (104) said electric response signal (yₑ(t)) at sampling times separated by a sampling period (tₛ), to form a series of response samples (yₙ);
determining (108) a transfer function (H(s)) based on said series of stimulus samples and said series of response samples being shifted by a number (k) of sampling periods (tₛ) corresponding to a propagation delay (T) of a measurement chain comprising said transmitter member (2), said process fluid (5) and said receiver member (3); and
determining (109) said property (P(t)) based on said transfer function (H(s)).

8. The method according to claim 7, wherein said acoustic stimulus signal (x(t)) is a multi-frequency acoustic signal.

9. The method according to claim 7 or 8, further comprising the steps of:
correlating said series of stimulus samples and said series of response samples; and
determining said propagation delay (T) based on said correlation.

10. The method according to any one of claims 7 to 9, comprising the steps of:
reading (101) consecutive stimulus samples in a first series of stimulus samples (Xₙ), for providing said acoustic stimulus signal (x(t)), starting at a first element position (Pₙ) of a first circular buffer (30), consecutive readings taking place at sampling times being separated by a sampling period (tₛ);
writing (105) consecutive response samples in a first series of response samples (yₙ), corresponding to said acoustic response signal (y(t)), starting at a first element position (Pₙ) of a second circular buffer (31), consecutive writings taking place at sampling times being separated by said sampling period (tₛ);
reading (106) consecutive response samples in a second series of response samples (yₙ) starting at a second element position (Pₙ) of the second circular buffer (31), said second element position being separated from said first element position of the second circular buffer by a first number of element positions; and
reading (106) consecutive stimulus samples in a second series of stimulus samples (Xₙ₋ₖ) starting at a second element position (Pₙ₋ₖ) of the first circular buffer (30), said second element position (Pₙ₋ₖ) being separated from said first element position (Pₙ) of the first circular buffer by a second number (k) of element positions, a difference (k) between said second number of element positions and said first number of element positions corresponding to a propagation delay (T) through a measurement chain comprising said transmitter member (2), said process fluid (5) and said receiver member (3).

11. The method according to any one of claims 7 to 10, wherein said property (P(t)) is determined by correlating said transfer function with a previously established relation between values of said property and corresponding transfer functions.
